Europäisches Patentamt

**European Patent Office**

**Office européen des brevets**

(19)

(11) Numéro de publication: **0 056 542**
**A1**

(12)

# DEMANDE DE BREVET EUROPEEN

(21) Numéro de dépôt: **81401988.1**

(22) Date de dépôt: **11.12.81**

(51) Int. Cl.³: **B 62 J 11/00**

(30) Priorité: **12.01.81 FR 8100395**

(43) Date de publication de la demande:
**28.07.82 Bulletin 82/30**

(84) Etats contractants désignés:
**BE CH DE GB IT LI NL SE**

(71) Demandeur: **ATELIERS DE LA MOTOBECANE
16, rue Lesault
F-93502 Pantin(FR)**

(72) Inventeur: **Rakover, Jean-Jacques
rue A. Mathias
F-02100 Morcourt(FR)**

(74) Mandataire: **Maureau, Bernard et al,
Cabinet Germain, Maureau et Millet Conseils en Brevets
d'Invention 64, rue d'Amsterdam
F-75009 Paris(FR)**

(54) **Fixation d'une clé de réglage et de démontage sur une selle.**

(57) La face inférieure de la selle (1) est munie de deux pattes (3) profilées pour permettre à volonté et élastiquement l'introduction et l'extraction de la clé (4).

FIG.1

EP 0 056 542 A1

L'invention a pour objet un agencement permettant la fixation d'une clé de règlage et de démontage, sur un cycle.

Pour diminuer le poids et le volume de l'outillage nécessaire au montage et au démontage des divers éléments d'un cycle par l'utilisateur lui-même, il est connu d'agencer ces éléments de manière telle qu'ils puissent être manoeuvrés par une seule et même clé; et c'est ainsi qu'il est connu de faire appel à des clés constituées par des tiges pleines, de section hexagonale, destinées à coopérer avec des vis ou des écrous dits "à six pans creux".

Le problème qui est à la base de l'invention est précisément celui du logement facile et sûr sur un cycle d'une telle clé, susceptible de régler et de démonter les organes principaux du cycle, tels que roues, potence, freins, selle, pédalier .....

Ce problème est résolu conformément à l'invention, en munissant la face inférieure de la selle de deux pattes profilées pour permettre à volonté et élastiquement l'introduction et l'extraction de la clé.

Suivant une forme d'exécution, le logement de cette clé est constitué par deux pattes qui, venues de moulage avec la face inférieure de la selle, sont parallèles, sont ouvertes et sont profilées pour permettre le clipsage de la clé.

Suivant une variante d'exécution, le logement de la clé est constitué par deux pattes qui comportent, d'une part, des moyens de clipsage sur les tiges formant l'armature de la selle et, d'autre part, des moyens de clipsage de la clé elle-même.

L'invention sera bien comprise d'ailleurs à l'aide de la description qui suit, en référence au dessin schématique annexé représentant, à titre d'exemple non limitatif, deux formes d'exécution de cet agencement pour la fixation d'une clé de démontage et de règlage des organes d'un cycle :

Figure 1 est une vue en perspective d'une première forme d'exécution;

Figure 2 est une vue en perspective éclatée des divers éléments du système de fixation dans le cas d'une deuxième forme d'exécution;

Figure 3 est une vue en coupe montrant les divers éléments à l'état monté, dans le cas de cette deuxième forme d'exécution.

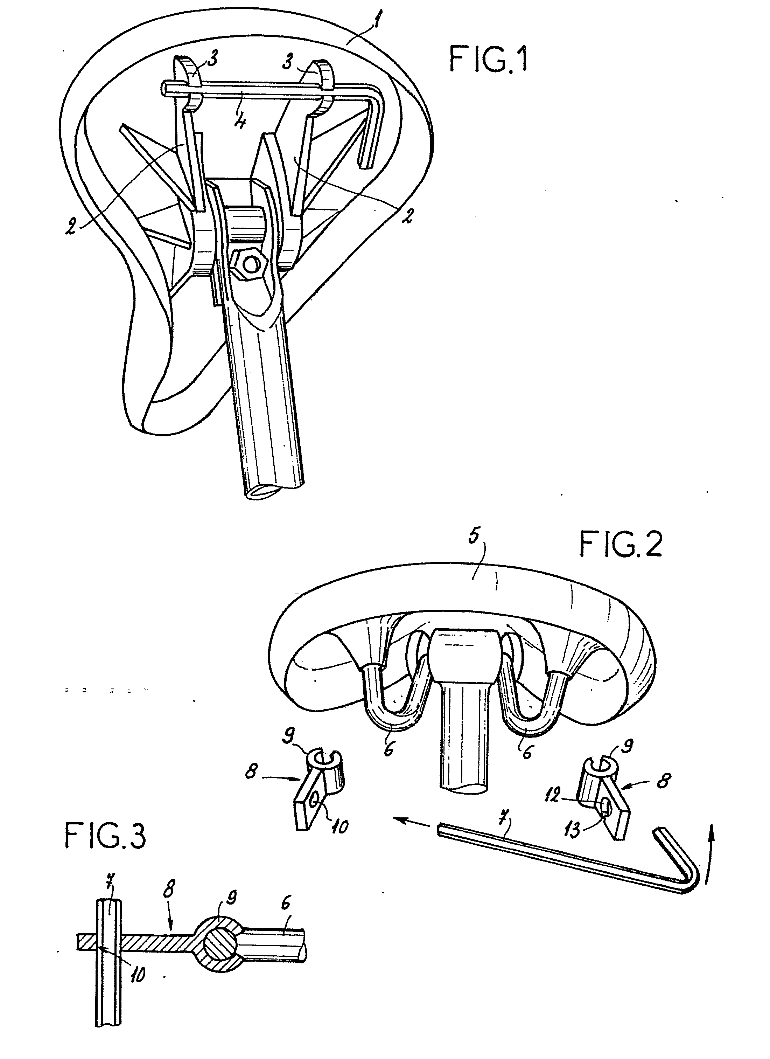

A la figure 1, 1 désigne une selle qui est réalisée en matière plastique moulée et dont la face inférieure comporte, venant de moulage, des nervures 2. Deux de ces nervures sont disposées longitudinalement de part et d'autre de l'axe longitudinal de la selle et elles se terminent, à leurs extrémités arrières, par deux pattes 3 qui sont ouvertes pour constituer des logements en forme de paliers, à l'intérieur desquels peut être introduit ou extrait élastiquement le bras le plus long d'une clé de réglage et de démontage 4. Le mode d'utilisation de ce système de fixation est des plus simples, puisque la clé se fixe par simple clipsage sous la selle 1.

Dans le cas de la variante d'exécution représentée aux figures 2 et 3, la fixation de la clé est réalisée sous une selle 5 d'un type bien connu, comportant deux tiges d'armature 6. C'est sur ces tiges que la clé 7 est fixée, mais la fixation est alors indirecte, car elle est réalisée par l'intermédiaire de deux pattes 8 qui présentent chacune une tête ouverte 9 leur permettant de se clipser sur les tiges 6 de la selle; et les mêmes pattes 8 comportent, dans leur extrémité arrière, l'une un orifice circulaire 10 et l'autre un logement 12 débouchant sous la face inférieure de la patte par une fente 13. Dans ce cas, la fixation de la clé est réalisée par introduction de l'une des extrémités de la clé 7 dans l'orifice 10 de l'une des pattes 8, et par clipsage de la clé dans l'orifice 12 de l'autre patte 8.

Dans un cas comme dans l'autre, la fixation de la clé est réalisée de façon sûre et invisible sous la selle du cycle et la clé peut néanmoins être extraite et remise en place de façon pratiquement instantanée.

Comme il va de soi, l'invention ne se limite pas à la seule forme d'exécution de cet agencement pour la fixation d'une clé de règlage et de démontage sur la selle d'un cycle; elle en embrasse au contraire toutes les variantes.

4        0056542

REVENDICATIONS

1.- Agencement pour la fixation d'une clé de réglage et de démontage sur un cycle, du type comportant deux pattes définissant le logement de la clé, caractérisé en ce que deux pattes (3, 8) profilées pour permettre à volonté et élastiquement l'introduction et l'extraction de la clé (4,7) sont aménagées sous la face inférieure de la selle (1,5) du cycle.

2. Agencement pour la fixation d'une clé selon la revendication 1, caractérisé en ce que les deux pattes (3) définissant le logement de la clé viennent de moulage avec la face inférieure de la selle (1) du cycle.

3. Agencement pour la fixation d'une clé selon la revendication 1, caractérisé en ce que le logement de la clé (7) est constitué par deux pattes (8) traversées par la clé et se clipsant sur les tiges (6) constituant l'armature de la selle (5).

FIG.1

FIG.2

FIG.3

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendica-tion concernée |
|---|---|---|
| A | CH - A - 294 930 (ZERVER) | |
| A | CH - A - 221 224 (GÄHLER) . . . | |
| A | GB - A - 664 256 (DESIGN AND DEVELOPMENTS) | |

**CLASSEMENT DE LA DEMANDE (Int. Cl. 3)**

B 62 J 11/00

**DOMAINES TECHNIQUES RECHERCHES (Int. Cl. 3)**

B 60 R
B 62 J
B 62 K

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X  Le présent rapport de recherche a été établi pour toutes les revendications

| Lieu de la recherche | Date d'achèvement de la recherche | Examinateur |
|---|---|---|
| La Haye | 19-04-1982 | GEMMELL |

OEB Form 1503.1   06.78